# EUROPÄISCHE PATENTANMELDUNG

(11) **EP 4 501 116 A1**
(43) Veröffentlichungstag der Anmeldung: **05.02.2025**
(21) Anmeldenummer: 23189751.3
(22) Anmeldetag: 04.08.2023
(51) Int. Cl.: A22C 7/00, A23P 30/10, B30B 15/00

(54) **VORRICHTUNG UND VERFAHREN ZUM HERSTELLEN EINES LEBENSMITTELPRODUKTES AUS EINER LEBENSMITTELPORTION**

(71) Anmelder: Eberhardt GmbH, 91586 Lichtenau (DE)
(72) Erfinder: Eberhardt, Rainer, 91586 Lichtenau (DE); Eberhardt, Ralf, 91586 Lichtenau (DE)
(74) Vertreter: Grünecker Patent- und Rechtsanwälte PartG mbB

(57) **Zusammenfassung**

Die Erfindung bezieht sich auf eine Vorrichtung (1) oder ein Verfahren zum Herstellen eines Lebensmittelproduktes aus einer Lebensmittelportion. Die Vorrichtung (1) umfasst ein an zumindest einer Seite offenes Gehäuse (2) zum Aufnehmen von einer Vielzahl von in zumindest einem Stapel (32) unmittelbar aufeinander angeordneten, jeweils mit einer Lebensmittelportion befüllbaren, separaten Formbehältern (30). Die Vorrichtung (1) umfasst ferner zumindest einen in einem Bodenbereich (6) des Gehäuses (2) angeordneten Antrieb (20) zum Antreiben eines im Gehäuse (2) in Richtung des Stapels (32) verschiebbar gelagerten Druckstempels (18) zum Ausüben einer Presskraft (FP) auf den Stapel (32) und eine zwischen einem Deckel (12) des Gehäuses (2) und dem Druckstempel (18) angeordnete teleskopierbare Führungsschiene (16) zum Führen des Druckstempels (18) im Gehäuse (2).

## Beschreibung

Die vorliegende Erfindung bezieht sich auf eine Vorrichtung und ein Verfahren zum Herstellen eines Lebensmittelproduktes aus einer Lebensmittelportion.

### Stand der Technik

Aus dem Stand der Technik sind Vorrichtungen oder Verfahren zum Herstellen eines Lebensmittelproduktes bekannt.

Beispielsweise lehrt DE 10 2010 031 011 A1 ein an allen Seiten offenes Gehäuse zum Aufnehmen von aufeinandergestapelten, mit Fleischwaren befüllten Formbehältern. Ein mittels eines handbetriebenen Spindelantriebs betriebener Druckstempel wird von oben auf die Formbehälter gedrückt, um darauf eine Presskraft darauf auszuüben. Ein Nachteil dieser Vorrichtung besteht darin, dass die manuelle Einstellung des Spindelantriebs unwirtschaftlich ist. Insbesondere wenn das Gehäuse in eine Kammer eingebracht ist, in der eine Wärme- oder Räucherbehandlung erfolgt, ist es erforderlich, den Herstellungsprozess zu unterbrechen, um den Spindelantrieb manuell zu justieren. Diese Prozessunterbrechung kann sich nachteilig auf die Qualität des hergestellten Lebensmittelproduktes auswirken. Ein weiterer Nachteil besteht darin, dass mit dem Spindelantrieb nur ein begrenzter Hub des Druckstempels möglich ist.

DE 100 44 100 A1 lehrt einen geschlossenen Pressbehälter mit mehreren Presskammern zum Aufnehmen von Fleischwaren. Die Presskammern sind durch teleskopierbare Kanäle voneinander getrennt. Eine über einen Pneumatikzylinder angetriebene Druckplatte übt eine Presskraft von unten in Richtung der Presskammern aus. Nachteilig an dieser Vorrichtung ist, dass aufgrund des geschlossenen Pressbehälters die Fleischwaren nur eingeschränkt wärmebehandelt, beispielsweise nicht geräuchert werden können. Ein weiterer Nachteil besteht darin, dass der Druckstempel leicht seitlich verkippen kann, wenn die Fleischwaren aufgrund von Abweichungen in der Zusammensetzung, z.B. dem Verhältnis von Wasser zu Fett, bei einer einwirkenden Presskraft unterschiedlich stark komprimiert werden. Dies kann zu einer Beschädigung des Pressbehälters und/oder der Fleischwaren führen.

### Aufgabe

Ausgehend von dem bekannten Stand der Technik besteht die zu lösende technische Aufgabe darin, eine Vorrichtung oder ein Verfahren zum Herstellen eines Lebensmittelproduktes anzugeben, das die Nachteile des Stands der Technik weitgehend überwindet. Es soll ein einfaches und effizientes Herstellen eines Lebensmittelproduktes aus einer Lebensmittelportion ermöglicht werden. Optional soll ermöglicht werden, die Lebensmittelportion einfach und effizient einer Wärmebehandlung zu unterziehen. Im Idealfall soll eine Genauigkeit und/oder Qualität des hergestellten Lebensmittelproduktes verbessert werden.

### Lösung

Diese Aufgabe wird erfindungsgemäß durch eine Vorrichtung zum Herstellen eines Lebensmittelproduktes aus einer Lebensmittelportion gemäß dem Anspruch 1 oder ein Verfahren zum Herstellen eines Lebensmittelproduktes aus einer Lebensmittelportion gemäß dem Anspruch 10 gelöst.

Vorteilhafte Weiterbildungen der Erfindung sind in den Unteransprüchen erfasst.

Es wird eine Vorrichtung zum Herstellen eines Lebensmittelproduktes aus einer Lebensmittelportion offenbart. Die Vorrichtung umfasst ein an zumindest einer Seite offenes Gehäuse zum Aufnehmen von einer Vielzahl von in zumindest einem Stapel unmittelbar aufeinander angeordneten, jeweils mit einer Lebensmittelportion befüllbaren, separaten Formbehältern. Die Vorrichtung umfasst ferner zumindest einen in einem Bodenbereich des Gehäuses angeordneten Antrieb zum Antreiben eines im Gehäuse in Richtung des Stapels verschiebbar gelagerten Druckstempels zum Ausüben einer Presskraft auf den Stapel. Die Vorrichtung umfasst ferner zumindest eine zwischen einem Deckel des Gehäuses und dem Druckstempel angeordnete teleskopierbare Führungsschiene zum Führen des Druckstempels im Gehäuse. Dadurch können Lebensmittelprodukte einfach einer Wärmebehandlung unterzogen werden. Optional kann die Vorrichtung ein, industriellen Anforderungen entsprechendes, wirtschaftliches Arbeiten ermöglichen. Im Idealfall kann eine Genauigkeit des hergestellten Lebensmittelproduktes, insbesondere dessen Form, verbessert werden. Optional kann ein Ausschuss an fehlerhaft hergestellten Lebensmittelprodukten reduziert werden.

Das Lebensmittelprodukt und/oder die Lebensmittelportion kann Fleisch und/oder Fisch umfassen. Optional kann das Lebensmittelprodukt und/oder die Lebensmittelportion kein Fleisch und/oder keinen Fisch umfassen, insbesondere vegetarisch oder vegan sein. Beispielsweise kann das Lebensmittelprodukt und/oder die Lebensmittelportion ein Fleischersatzprodukt oder Gemüse umfassen. Das Lebensmittelprodukt kann für den Verzehr durch Menschen oder Tiere geeignet sein.

Die Wärmebehandlung kann einen Back-, Brat-, Gar- und/ oder Räucherprozess umfassen. Die Wärmebehandlung kann ein Erhitzen und/oder optional ein Abkühlen umfassen. Die Lebensmittelportion kann in einem Temperaturbereich von -30°C bis +90°C wärmebehandelt werden. Die Vorrichtung inklusive des Antriebs sind für den Einsatz über diesen Temperaturbereich geeignet - d.h. über den gesamten Temperaturbereich von -30°C bis +90°C bleiben der Antrieb und die Vorrichtung insgesamt korrosionsfest, formstabil, betriebsfähig und/oder behalten ihre Funktionsfähigkeit bei.

Indem das Gehäuse an zumindest einer Seite offen ist, kann sichergestellt werden, dass die Lebensmittelportion eine gleichmäßige Wärme- oder Räucherbehandlung erfährt. Das Gehäuse und/oder die Führungsschiene kann Edelstahl aufweisen oder daraus bestehen, was einen Einsatz der Vorrichtung für Lebensmittel ermöglichen kann. Optional kann die Führungsschiene, insbesondere das Schienengehäuse und/oder das Auszugelement, Kunststoff umfassen oder daraus bestehen. Im Idealfall kann eine Reinigung des Gehäuses und/oder der Führungsschiene erleichtert und im Idealfall die Qualität des hergestellten Lebensmittelproduktes verbessert werden.

Der Druckstempel kann mittels einer Antriebskraft des Antriebs bewegt werden. Optional können mehrere Antriebe vorgesehen sein, die insbesondere synchron angetrieben werden können. Der Antrieb kann den Druckstempel derart antreiben, dass dieser die Presskraft stufenweise oder stufenlos auf den Stapel überträgt. Die Presskraft kann abhängig von der zu verarbeitenden Lebensmittelportion, insbesondere deren Zusammensetzung, sein. Beispielsweise kann die Antriebskraft des Antriebs mittels eines Sensors, beispielsweise Kraftsensors, erfasst werden und mittels einer Steuerung derart eingestellt werden, dass der Druckstempel die gewünschte Presskraft erzeugt. Indem der Antrieb für den Druckstempel an der Vorrichtung angeordnet ist, kann eine separate Pressstation entfallen.

Der Druckstempel kann zwischen einer unteren Druckstempelposition und einer oberen Druckstempelposition bewegt werden. Der Druckstempel kann ausgehend von der unteren Druckstempelposition in die obere Druckstempelposition bewegt werden, um die Lebensmittelprodukte herzustellen. Die untere Druckstempelposition kann von dem unter dem Druckstempel angeordneten Antrieb, insbesondere dessen Höhe, abhängig sein. Die obere Druckstempelposition kann von dem Stapel, insbesondere dessen Höhe an einem Ende des Herstellungsprozesses, abhängig sein.

Da die Formbehälter im Gehäuse unmittelbar aufeinandergestapelt sind, kann sich der von dem Druckstempel auf einen obersten Formbehälter des Stapels, der an dem Deckel des Gehäuses anliegen kann, ausgeübte Druck auf alle im Stapel befindlichen Formbehälter übertragen.

Der Druckstempel kann den Stapel, insbesondere einen Behälterboden eines untersten Formbehälters, zumindest abschnittsweise kontaktieren. Der Druckstempel kann einen rechteckigen Stempelrahmen umfassen an dem eine Vielzahl von horizontalen Stempelstreben angeordnet sind, die mit einem oder mehreren Behälterböden kontaktierbar sind.

Ein unterster Formbehälter des Stapels kann unmittelbar auf dem Druckstempel positioniert sein. Da das Gehäuse an zumindest einer Seite offen ist, kann es beispielsweise auch bei einer relativ großen Bauhöhe des Gehäuses einfach und schnell mit Formbehältern bestückt werden. Die Formbehälter können in dem Gehäuse platziert werden, während der Druckstempel in der unteren Druckstempelposition ist. Optional kann der Druckstempel zum Bestücken des Gehäuses auf eine beliebige Höhe zwischen der unteren Druckstempelposition und dem Deckel des Gehäuses bewegt werden, um ein Bestücken des Gehäuses zu erleichtern. Der Druckstempel kann mit zunehmender Anzahl an in dem Gehäuse positionierten Formbehältern in Richtung der unteren Druckstempelposition, die eine Ausgangsposition des Druckstempels für den Herstellungsprozess darstellen kann, bewegt werden, bis alle Formbehälter im Gehäuse platziert sind.

Der Stapel kann nur einen oder mehrere Formbehälter umfassen. Die Anzahl der Formbehälter kann von einer Höhe des Gehäuses, insbesondere eines nachfolgend beschriebenen Gestells, des Antriebs, des Druckstempels und/oder des Formbehälters abhängig sein. Der Stapel kann mindestens fünf Formbehälter, vorzugsweise mindestens zehn Formbehälter umfassen. Der Stapel kann beispielsweise 20 Formbehälter, vorzugsweise höchstens 15 Formbehälter umfassen. Der Formbehälter kann einen Behälterboden, insbesondere eine Schale, zum Aufnehmen der Lebensmittelportion aufweisen und einen Behälterdeckel zum Abdecken der Lebensmittelportion. Der Formbehälter, insbesondere der Behälterboden und/oder der Behälterdeckel, kann zumindest abschnittsweise Aussparungen aufweisen, durch die Luft, Wasser und/oder Fett strömen kann. Der Formbehälter kann an die Abmessungen des herzustellenden Lebensmittelproduktes anpassbar sein. Indem die Presskraft auf den Formbehälter einwirkt, können sich der Behälterdeckel und der Behälterboden relativ zueinander verschieben, um das Lebensmittelprodukt unter Druck zu formen.

Der Bodenbereich des Gehäuses kann ein Boden des Gehäuses sein. Optional kann der Bodenbereich ein Bereich sein, der in einer vertikalen Richtung der Vorrichtung höchstens 20 cm, vorzugsweise höchstens 10 cm, von dem Boden des Gehäuses entfernt ist. Der Boden des Gehäuses und/ oder der Deckel des Gehäuses kann zumindest abschnittsweise Aussparungen aufweisen, durch die Luft, Wasser und/oder Fett strömen kann. Der Boden und/oder der Deckel kann einen rechteckigen Rahmen umfassen an dem eine Vielzahl von horizontalen Streben angeordnet sind. Der Boden und der Deckel können an ihren Ecken jeweils mit vertikalen Längsstreben verbunden sein, um ein Gestell zu bilden. An den Längsstreben können an je zwei einander gegenüberliegenden Seiten des Gestells jeweils eine oder mehrere Querstreben angeordnet sein, die das Gestell stabilisieren können. Optional kann der Deckel des Gestells lösbar an den vertikalen Längsstreben befestigt sein, um bei Bedarf, beispielsweise für eine Reinigung abgenommen zu werden.

Die teleskopierbare Führungsschiene dient der Führung, insbesondere Linearführung, des Druckstempels im Gehäuse, wenn dieser aufgrund der Antriebskraft im Gehäuse bewegt wird. Es kann ein ungleichförmiges Bewegen des Druckstempels, insbesondere ein seitliches Verkippen oder Verkanten im Gehäuse, vermieden werden. Optional kann sichergestellt werden, dass der Druckstempel eine gewünschte Presskraft auf den Stapel ausübt. Dies kann zu einem nahezu reibungsfreien und optional wirtschaftlichen Prozessablauf beitragen.

Die Führungsschiene kann lösbar an dem Deckel und/oder Druckstempel befestigt sein. Dies kann insbesondere für eine Reinigung der Führungsschiene und/oder des Gehäuses von Vorteil sein.

Die Führungsschiene kann ein Schienengehäuse mit einem darin verschiebbaren Auszugelement umfassen. Das Schienengehäuse kann mit dem Deckel des Gehäuses verbunden und das Auszugelement kann mit dem Druckstempel verbunden sein oder andersherum. Das Auszugelement kann höchstens um einen maximalen Schienenweg aus dem Schienengehäuse heraus bzw. in das Schienengehäuse hinein verschoben werden. Der maximale Schienenweg kann von einer Länge des Auszugelements abhängen, insbesondere dieser entsprechen. In einem Zustand in dem der Druckstempel in der unteren Druckstempelposition ist, kann das Auszugelement aus dem Schienengehäuse um höchstens den maximalen Schienenweg herausgefahren sein. Bewegt sich der Druckstempel von der unteren Druckstempelposition in die obere Druckstempelposition um einen Druckstempelweg, kann das Auszugelement um diesen Druckstempelweg in das Schienengehäuse hineinfahren. Der Druckstempelweg kann höchstens dem maximalen Schienenweg entsprechen. Die Führungsschiene, insbesondere deren Länge, kann derart dimensioniert sein, dass der Druckstempelweg höchstens 95 Prozent, vorzugsweise höchstens 90 Prozent des maximalen Schienenwegs beträgt, um zu verhindern, dass der Druckstempel eine größere Bewegung als das Auszugelement ausführt. Das Schienengehäuse kann einen Schienengehäuse-Innendurchmesser von mindestens etwa 35 mm, vorzugsweise mindestens etwa 40 mm haben. Das Schienengehäuse kann einen Schienengehäuse-Innendurchmesser von höchstens etwa 50 mm, vorzugsweise höchstens etwa 45 mm, haben. Das Schienengehäuse kann eine Schienengehäuse-Wandstärke von mindestens etwa einem Millimeter, vorzugsweise mindestens etwa zwei Millimetern, haben. Das Schienengehäuse kann eine Schienengehäuse-Wandstärke von höchstens etwa fünf Millimetern, vorzugsweise höchstens etwa drei Millimetern, haben. Ein Auszugelement-Außendurchmesser kann kleiner als der Schienengehäuse-Innendurchmesser sein. Das Auszugelement kann einen Auszugelement-Außendurchmesser von mindestens etwa 30 mm, vorzugsweise mindestens etwa 35 mm haben. Das Auszugelement kann einen Auszugelement-Außendurchmesser von höchstens etwa 47 mm, vorzugsweise höchstens etwa 40 mm, haben. Das Auszugelement kann eine Auszugelement-Wandstärke von mindestens etwa einem Millimeter, vorzugsweise mindestens etwa zwei Millimetern, haben. Das Auszugelement kann eine Auszugelement-Wandstärke von höchstens etwa fünf Millimeter, vorzugsweise höchstens etwa drei Millimetern, haben. Das Auszugelement kann mit dem Schienengehäuse mittels eines Gleit-Innenrohrs in Eingriff stehen. Das Gleit-Innenrohr kann Kunststoff, insbesondere Polyoxymethylen (POM) und/oder Polytetrafluorethylen (PTFE), umfassen oder daraus bestehen. Bei einer Bewegung des Auszugelements relativ zum Schienengehäuse kann das Gleit-Innenrohr, insbesondere eine Gleitfläche davon, an einer Schienengehäuse-Innenwand gleiten. Es können eine Beschädigung des Auszugelements und/oder des Schienengehäuses verhindert werden. Es können im Idealfall eine Reibung, Vibrationen und/oder Geräusche zwischen dem Auszugelement und dem Schienengehäuse reduziert werden. Das Gleit-Innenrohr kann an dem Auszugelement, vorzugsweise lösbar, befestigt sein. Beispielsweise kann das Gleit-Innenrohr an einem (Innen)Gewinde des Auszugelements, zum Beispiel mit zumindest einer Schraube, befestigt sein. Die Gleitfläche kann mindestens etwa 50 mm, vorzugsweise mindestens etwa 60 mm, lang sein. Die Gleitfläche kann höchstens etwa 120 mm, vorzugsweise höchstens etwa 90 mm, lang sein.

Vorzugsweise sind zwei oder mehr Führungsschienen vorgesehen. Dies kann die Führung des Druckstempels verbessern, und insbesondere ein seitliches Verkippen oder Verkanten des Druckstempels nahezu vermeiden. Sind mehrere Führungsschienen vorgesehen, können diese in einer m x n Matrix angeordnet sein. Ein Abstand der Führungsschienen zueinander und/oder zu einem Rand des Gehäuses kann abhängig von dem Formbehälter oder Stapel, insbesondere dessen Breite und/oder Länge, sein. Insbesondere wenn in dem Gehäuse mehrere Stapel nebeneinander angeordneten werden sollen, kann die Anzahl und/oder Anordnung der Führungsschienen von der Anzahl der Stapel abhängen. Eine oder mehrere Führungsschienen können, insbesondere hintereinander, zwischen den Stapeln angeordnet sein.

Vorzugsweise ist die teleskopierbare Führungsschiene nahtlos ausgebildet. Dies kann eine Führung des Druckstempels verbessern, insbesondere ein seitliches Verkippen oder Verkanten des Druckstempels nahezu vermeiden. Dies kann eine gleichmäßige Verschiebung des Auszugelements in dem Schienengehäuse ermöglichen. Somit kann eine gleichförmige, insbesondere nahezu ruckfreie, Bewegung des Druckstempels ermöglicht werden. Im Idealfall kann eine Qualität des hergestellten Lebensmittelproduktes erhöht werden.

Vorzugsweise ist die teleskopierbare Führungsschiene als seitlicher Anschlag für den Stapel ausgebildet. Dies kann eine einfache und genaue Positionierung des Stapels innerhalb des Gehäuses ermöglichen. Insbesondere bei der Bewegung des Druckstempels kann die Führungsschiene ein Kippen und/oder Verdrehen eines oder mehrerer Formbehälter des Stapels nahezu vermeiden. Somit kann der Stapel in dem Gehäuse stabilisiert werden. Außerdem kann dies ein Bestücken und Entleeren des Gehäuses erleichtern.

Vorzugsweise ist der Druckstempel und/oder die teleskopierbare Führungsschiene, insbesondere ein Auszugelement, je um mindestens 35 cm, vorzugsweise um mindestens 40 cm, und/oder höchstens 80 cm, vorzugsweise höchstens 60 cm verschiebbar. Dadurch kann sichergestellt werden, dass die Bewegung des Druckstempels oder der Führungsschiene ausreichend groß ist, um das Lebensmittelprodukt zu formen. Optional kann dies ein einfaches Bestücken des Gehäuses ermöglichen, beispielsweise wenn der Druckstempel zum Bestücken des Gehäuses ausgehend von der unteren Druckstempelposition angehoben ist. Die Verschiebung des Druckstempels bzw. der Führungsschiene kann von der zu verarbeitenden Lebensmittelportion abhängig sein.

Vorzugsweise weist der Antrieb einen pneumatischen Hubzylinder auf. Dies kann ein einfaches und effizientes Bewegen des Druckstempels ermöglichen. Die Antriebskraft des Antriebs kann einfach und genau erzeugt und insbesondere derart eingestellt werden, dass der Druckstempel eine gewünschte Presskraft auf den Stapel ausübt. Beispielsweise kann ein Druck zum Erzeugen der Antriebskraft des Antriebs mittels eines Sensors, beispielsweise eines Manometers, erfasst werden und mittels einer Steuerung derart eingestellt werden, dass der Druckstempel die gewünschte Presskraft erzeugt. Optional kann eine, insbesondere im Vergleich zu einem manuellen (Spindel)antrieb, höhere Presskraft auf den Druckstempel erzeugt werden. Während des Herstellungsprozesses kann ein Widerstand der zu pressenden Lebensmittelportion, beispielsweise aufgrund von Wasserverlust, abnehmen. Daher kann es gewünscht sein, die Presskraft entsprechend dieser Abnahme des Widerstands zu justieren, insbesondere zu erhöhen, um das gewünschte Lebensmittelprodukt herzustellen. Mittels des pneumatischen Antriebs kann diese Steuerung des Druckstempels einfach realisiert werden. Insbesondere kann ein manuelles (Nach)justieren des Antriebs, wie es beispielsweise bei einem manuell betriebenen Spindelantrieb erforderlich ist, entfallen.

Der Hubzylinder kann als Balgzylinder ausgebildet sein. Dadurch kann ein belastbarer, zuverlässiger und im Idealfall kostengünstiger Antrieb realisiert werden. Der pneumatische Antrieb kann eine Schnellkupplung aufweisen, die einfach mit einer Druckluftquelle verbunden werden kann. Dies kann insbesondere von Vorteil sein, wenn das Gehäuse in einen Bearbeitungsraum, in der die Wärme- und/oder Rauchbehandlung erfolgt, eingefahren werden soll, um dort das Lebensmittelprodukt herzustellen. Nachdem das Gehäuse in dem Bearbeitungsraum platziert ist, kann ein Druckluftschlauch an die Schnellkupplung angeschlossen werden und der Antrieb so mit Druckluft versorgt werden. Dadurch kann ein Unterbrechen des Herstellungsprozesses, um den Antrieb zu justieren, entfallen und im Idealfall eine Genauigkeit und/oder Qualität des hergestellten Lebensmittelproduktes verbessert werden.

Vorzugsweise ist das Gehäuse durch ein an mehreren, vorzugsweise an allen Seiten offenes Gestell gebildet. Dadurch kann eine besonders gleichmäßige Wärme- (Erhitzen und Abkühlen) und/oder Rauchbehandlung aller im Stapel befindlichen Fleischwaren gewährleistet werden.

Vorzugsweise ist das Gehäuse zum Aufnehmen von mehreren nebeneinander angeordneten Stapeln ausgebildet. Dadurch kann eine Anzahl an gleichzeitig herstellbaren Lebensmittelprodukten erhöht werden. Somit kann eine, industriellen Anforderungen entsprechende, wirtschaftliche Herstellung von Lebensmittelprodukten in großen Chargen mit egalisierter Form und Qualität ermöglicht werden. Es kann ein Durchsatz der Vorrichtung erhöht werden. Die Stapel können mittels Führungsschienen zueinander ausgerichtet werden. Das Gehäuse kann dazu ausgebildet sein mindestens zwei, vorzugsweise mindestens drei, Stapel aufzunehmen. Das Gehäuse kann dazu ausgebildet sein, höchstens fünf, vorzugsweise höchstens vier, Stapel aufzunehmen.

Vorzugsweise ist das Gehäuse fahrbar. Dadurch kann die Vorrichtung einfach in den Bearbeitungsraum eingefahren werden. Es kann eine wirtschaftliche Herstellung von Lebensmittelprodukten ermöglicht werden. Das Gehäuse kann eine Vielzahl von, vorzugsweise stoppbaren, Rollen aufweisen, die an dem Gestell, insbesondere dem Boden, angeordnet sein können. Die Rollen können klappbar sein.

Optional kann das Gestell zumindest eine Aufnahmevorrichtung aufweisen, um auf Förderbändern oder mittels eines Staplers bewegbar zu sein.

Optional kann das Gestell, insbesondere an den Längsstreben, eine Greifvorrichtung zum Verfahren des Gehäuses aufweisen.

Optional kann das Gestell stapelbar sein. Es können zwei oder mehr Gestelle aufeinander stapelbar sein. Jedes Gestell kann zumindest eine Stapelvorrichtung zum Stapeln mit einem zweiten Gestell aufweisen.

Die Erfindung betrifft ferner ein Verfahren zum Herstellen eines Lebensmittelproduktes aus einer Lebensmittelportion mittels einer oben beschriebenen Vorrichtung.

Die von einem der Aspekte (Vorrichtung oder Verfahren) beschriebenen Merkmale oder Erläuterungen können einzeln oder in Kombination auf die anderen Aspekte übertragen und mit diesen kombiniert werden.

Im Folgenden wird die Erfindung anhand von beispielhaften Ausführungsformen erläutert. Es zeigen:
- Figur 1: eine perspektivische Darstellung einer Vorrichtung zum Herstellen eines Lebensmittelproduktes gemäß einer Ausführungsform;
- Figur 2a: eine schematische Vorderansicht einer Vorrichtung zum Herstellen eines Lebensmittelproduktes gemäß einer Ausführungsform zu Beginn eines Herstellungsprozesses;
- Figur 2b: eine schematische Vorderansicht einer Vorrichtung zum Herstellen eines Lebensmittelproduktes gemäß einer Ausführungsform am Ende eines Herstellungsprozesses; und
- Figur 3: eine schematische Ansicht einer Führungsschiene einer Vorrichtung zum Herstellen eines Lebensmittelproduktes gemäß einer Ausführungsform.

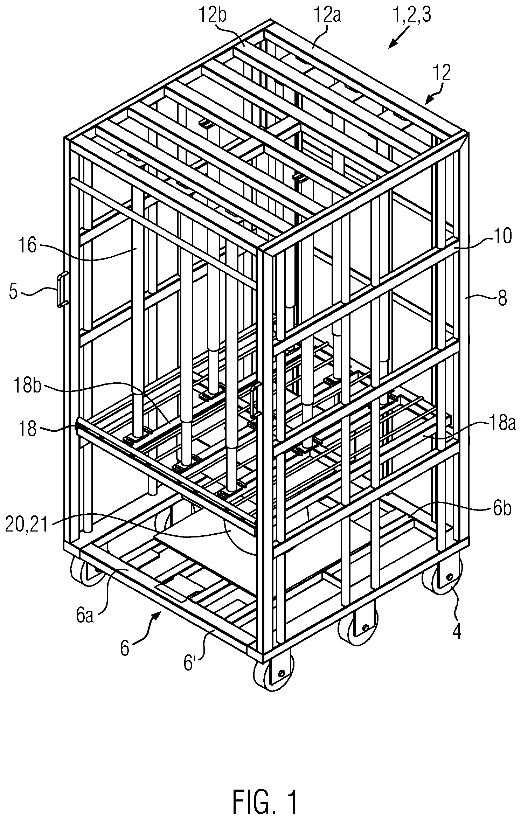

Figur 1 zeigt perspektivische Darstellung einer Vorrichtung 1 zum Herstellen eines Lebensmittelproduktes aus einer Lebensmittelportion gemäß einer Ausführungsform. Im vorliegenden Ausführungsbeispiel umfassen das Lebensmittelprodukt und die Lebensmittelportion je Fleisch. Optional kann das Lebensmittelprodukt und/oder die Lebensmittelportion Fisch umfassen. Optional kann das Lebensmittelprodukt und/oder die Lebensmittelportion kein Fleisch und/oder keinen Fisch umfassen, insbesondere vegetarisch oder vegan sein. Beispielsweise kann das Lebensmittelprodukt und/oder die Lebensmittelportion ein Fleischersatzprodukt oder Gemüse umfassen. Das Lebensmittelprodukt kann für den Verzehr durch Menschen oder Tiere geeignet sein.

Die Vorrichtung 1 umfasst ein an allen Seiten offenes Gehäuse 2, das durch ein an allen Seiten offenes Gestell 3 gebildet ist und einen quaderförmigen Hohlraum festlegt. Durch die rahmenartige offene Bauweise können Rauch und warme/kalte Luft von allen Seiten in das Innere des Gehäuses 2 eindringen, so dass eine gleichmäßige Behandlung der in die Vorrichtung eingebrachten Lebensmittelportionen erfolgt. Zudem kann Wasser und/oder Fett durch das offene Gestell 3 strömen. Das Gehäuse 2 und nachfolgend beschriebene Führungsschienen 16 bestehen beispielsweise aus oder umfassen Edelstahl, was einen Einsatz der Vorrichtung 1 für Lebensmittel ermöglicht. Optional können die Führungsschienen 16, insbesondere ein Schienengehäuse 16a und/oder ein Auszugelement 16b, Kunststoff umfassen oder daraus bestehen. Im Idealfall wird eine Reinigung des Gehäuses 2 und der Führungsschienen 16 erleichtert und im Idealfall eine Qualität der hergestellten Lebensmittelprodukte verbessert.

Das Gehäuse 2 umfasst einen Boden 6`, der durch einen rechteckigen Rahmen 6a gebildet ist, an dem vier horizontalen Streben 6b angeordnet sind. Das Gehäuse 2 weist ferner einen Deckel 12 auf, der durch einen rechteckigen Deckelrahmen 12a gebildet ist, an dem fünf horizontalen Deckelstreben 12b angeordnet sind. Zwischen den horizontalen Streben 6b und den Deckelstreben 12b sind Aussparungen gebildet, durch die Luft, Wasser und/oder Fett strömen kann. Dadurch wird eine besonders gleichmäßige Wärme- (Erhitzen und Abkühlen) und/oder Rauchbehandlung aller Fleischwaren gewährleistet.

Der Deckel 12 und der Boden 6' sind an ihren Ecken jeweils mit vertikalen Längsstreben 8 verbunden, um das Gestell 3 zu bilden. Der Deckel 12 ist lösbar mit den vertikalen Längsstreben 8 verbunden, um bei Bedarf, beispielsweise für eine Reinigung abgenommen zu werden. An den Längsstreben 8 sind an je zwei einander gegenüberliegenden Seiten des Gestells 3 jeweils drei Querstreben 10 angeordnet sein, die das Gestell 3 stabilisieren. Am Boden 6' des Gehäuses 2 sind sechs stoppbare Rollen 4 angeordnet, um das Gehäuse 2 zu verfahren. An den Längsstreben 8 ist an einer Vorderseite des Gehäuses 2 je eine Greifvorrichtung 5 angeordnet, um die Vorrichtung 1, insbesondere in einen Bearbeitungsraum, in der die Wärme- und/oder Rauchbehandlung erfolgt, zu fahren.

Die Wärmebehandlung umfasst im vorliegenden Ausführungsbeispiel einen Räucherprozess in bei etwa 75 °C. Optional kann die Wärmebehandlung einen Back-, Brat-, und/oder Garprozess umfassen. Die Wärmebehandlung kann optional ein Erhitzen und/oder Abkühlen umfassen. Optional kann die Lebensmittelportion in einem Temperaturbereich von -30°C bis +90°C wärmebehandelt werden.

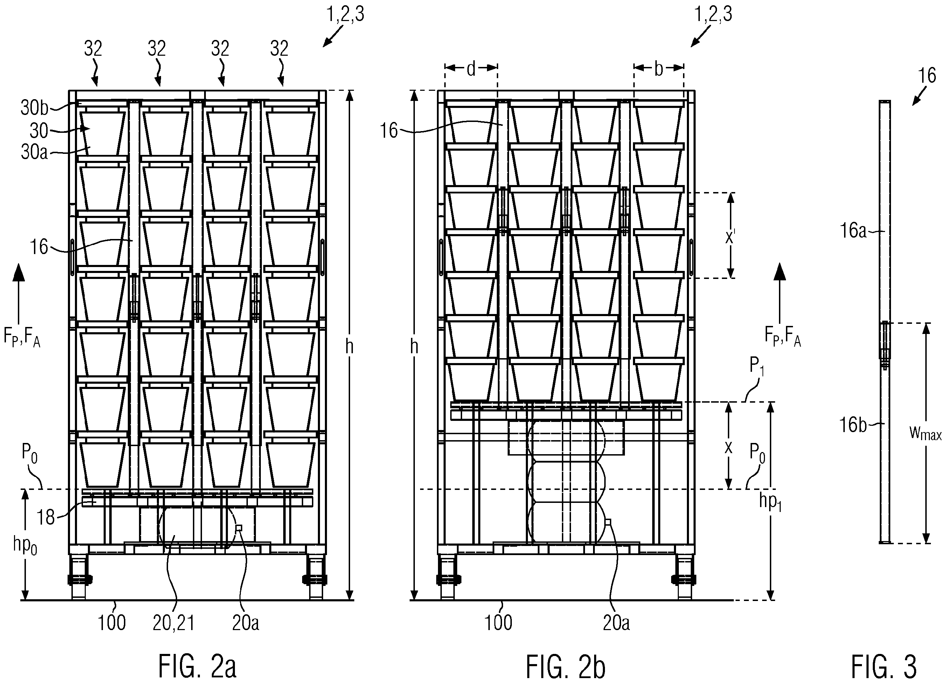

In dem Gehäuse 2 sind vier Stapel 32 mit separaten, d. h. einzeln handhabbaren, Formbehältern 30 nebeneinander angeordnet (siehe Figur 2a). Jeder Stapel 32 umfasst sieben unmittelbar aufeinander gestapelte Formbehälter 30. Somit können in einem Herstellungsprozess gleichzeitig 28 Lebensmittelprodukte hergestellt werden. Die Anordnung mehrerer Stapel 32 erhöht einen Durchsatz der Vorrichtung 1. Somit wird eine, industriellen Anforderungen entsprechende, wirtschaftliche Herstellung von Lebensmittelprodukten in großen Chargen mit egalisierter Form und Qualität ermöglicht.

Der Formbehälter 30 weist einen Behälterboden 30a auf, der als eine Schale zum Aufnehmen der Lebensmittelportion ausgebildet ist. Ein Behälterdeckel 30b ist zum Abdecken der Lebensmittelportion vorgesehen. Wirkt eine entsprechend dem Pfeil in den Figuren 2a und 2b orientierte Presskraft F_{P} auf den Formbehälter 30, verschieben sich der Behälterdeckel 30b und der Behälterboden 30a relativ zueinander, um das Lebensmittelprodukt unter Druck bzw. unter Einwirkung der Presskraft F_{P} zu formen (siehe Figur 2b).

Die Stapel 32 sind unmittelbar auf einem in dem Gehäuse 2 in Richtung des Stapels 32 verschiebbar gelagerten Druckstempel 18 positioniert, der zum Ausüben der Presskraft F_{P} auf die Stapel 32 vorgesehen ist. Der Druckstempel 18 umfasst einen rechteckigen Stempelrahmen 18a, an dem eine Vielzahl von horizontalen Stempelstreben 18b angeordnet sind, die mit den Behälterböden 30b der untersten Formbehälter 30 jedes Stapels 32 kontaktierbar sind.

In Figur 2a ist die Vorrichtung 1 unmittelbar nach dem Bestücken dargestellt, wenn der Druckstempel 18 auf die Stapel 32 noch keine Presskraft F_{P} ausübt. Mittels der Vorrichtung 1 ist das Bestücken des Gehäuses 2 mit den Formbehältern 30 erleichtert. Dies wird dadurch erreicht, dass das Gehäuse 2 an allen Seiten offen ist, sodass es auch bei relativ großer Bauhöhe h der Vorrichtung, im vorliegenden Fall etwa 200 cm, einfach und schnell mit Formbehältern 30 befüllt werden kann. Zudem werden die Formbehälter 30 in dem Gehäuse 2 platziert, während der Druckstempel 18 in der unteren Druckstempelposition P₀ auf einer unteren Höhe hₚ₀ der unteren Druckstempelposition P₀ von etwa 40 cm ausgehend von einer Aufstandsfläche 100 der Vorrichtung 1 ist. Optional kann der Druckstempel 18 zum Bestücken des Gehäuses 2 auf eine beliebige Höhe zwischen der unteren Druckstempelposition P₀ und dem Deckel 12 des Gehäuses 2 bewegt werden, um ein Bestücken des Gehäuses 2 zu erleichtern. Der Druckstempel 18 kann dann mit zunehmender Anzahl an in dem Gehäuse 2 platzierten Formbehältern 30 in Richtung der unteren Druckstempelposition P₀, die eine Ausgangsposition des Druckstempels 18 für den Herstellungsprozess darstellt, bewegt werden, bis alle Formbehälter 30 im Gehäuse 2 positioniert sind.

Der Druckstempel 18 wird mittels eines in einem Bodenbereich 6 angeordneten Antriebs 20 mit einer Antriebskraft F_{A} ausgehend von einer unteren Druckstempelposition P₀ im Gehäuse 2 nach oben in Richtung des Deckels 12 bewegt. Im vorliegenden Ausführungsbeispiel wird der Bodenbereich 6 durch den Boden 6' des Gehäuses 2 gebildet. Optional kann der Bodenbereich 6 ein Bereich sein, der in einer vertikalen Richtung der Vorrichtung 1 bis zu 40cm, vorzugsweise höchstens 20 cm, weiter vorzugsweise höchstens 10 cm, von dem Boden 6' des Gehäuses 2 entfernt ist. Die untere Druckstempelposition P₀ hängt von dem unter dem Druckstempel 18 angeordneten Antrieb 20, insbesondere dessen Höhe, ab. Im vorliegenden Fall beträgt die Höhe des Antriebs 20 etwa 24 cm. Somit liegt die untere Druckstempelposition P₀ im vorliegenden Ausführungsbeispiel etwa 24 cm oberhalb des Bodens 6`. Zuzüglich einer Dicke des Bodens 6' und des Druckstempels 18 sowie einer Höhe der Rollen 4 beträgt die untere Höhe hₚ₀ der unteren Druckstempelposition P₀ etwa 40 cm ausgehend von einer Aufstandsfläche 100 der Vorrichtung 1.

Ein Stempelweg des Druckstempels 18 wird dabei von dem Stapel 32 begrenzt, sodass der Druckstempel 18 in eine obere, von einer Höhe des Stapels 32 und der zu verarbeitenden Lebensmittelportion abhängige, Druckstempelposition P₁ bewegt wird. Durch diese Bewegung übt der Druckstempel 18 die Presskraft F_{P} auf die Stapel 32 aus, um die Lebensmittelportionen in den Formbehältern 30 zu formen bzw. die Lebensmittelprodukte herzustellen.

In Figur 2b ist die Vorrichtung 1 am Ende des Herstellungsprozesses dargestellt, wenn der Druckstempel 18 nach oben in die obere Druckstempelposition P₁ gefahren ist und auf die Stapel 32 die Presskraft F_{P} ausübt. Der Druckstempel 18 bewegt sich ausgehend von der unteren Druckstempelposition P₀ in die obere Druckstempelposition P₁ um einen Druckstempelweg x von etwa 50 cm. Eine obere Höhe hₚ₁ der oberen Druckstempelposition P₁ des Druckstempels 18 beträgt im vorliegenden Ausführungsbeispiel etwa 90 cm ausgehend von einer Aufstandsfläche 100 der Vorrichtung 1. Optional kann der Druckstempel 18 um mindestens 35 cm, vorzugsweise um mindestens 40 cm, und/oder höchstens 80 cm, vorzugsweise höchstens 60 cm verschiebbar sein. Aufgrund der Bewegung des Druckstempels 18 wirkt auf die Stapel 32 die Presskraft F_{P}. Da die Formbehälter 30 unmittelbar aufeinandergestapelt sind, überträgt sich der von dem Druckstempel 18 auf einen obersten Formbehälter 30 des Stapels 32, der an dem Deckel 12 des Gehäuses 2 anliegt, ausgeübte Druck auf alle im Stapel 32 befindlichen Formbehälter 30.

Der Antrieb 20 für den Druckstempel 18 ist an dem Boden 6' angeordnet und pneumatisch ausgeführt. Der Antrieb 20 übt eine Antriebskraft F_{A} auf den Druckstempel 18 aus, der dadurch in die obere Druckstempelposition P₁ bewegt wird und während der Bewegung die Presskraft F_{P} auf die Stapel 32 ausübt. Dabei wird ein Druck zum Erzeugen der Antriebskraft F_{A} des Antriebs 20 mittels eines nicht dargestellten Sensors, beispielsweise eines Manometers, erfasst und mittels einer nicht dargestellten Steuerung derart eingestellt, dass der Druckstempel 18 die gewünschte Presskraft F_{P} erzeugt. Indem der Antrieb 20 für den Druckstempel 18 an der Vorrichtung 1 angeordnet ist, entfällt eine separate Pressstation.

Der pneumatische Antrieb 20 weist einen pneumatischen Hubzylinder 21 auf, der als Balgzylinder ausgebildet ist. Dadurch kann ein belastbarer, zuverlässiger und im Idealfall kostengünstiger Antrieb realisiert werden. Mittels des pneumatischen Hubzylinders 21 wird ein einfaches und effizientes Bewegen des Druckstempels 18 ermöglicht. Insbesondere entfällt dadurch ein manuelles (Nach)justieren des Antriebs, wie es beispielsweise bei einem manuell betriebenen Spindelantrieb erforderlich ist. Mittels des pneumatischen Antriebs 20 ist es möglich, die Presskraft F_{P} einfach und genau zu erzeugen.

Der Antrieb 20 treibt den Druckstempel 18 derart an, dass dieser die Presskraft F_{P} stufenlos auf die Stapel 32 überträgt. Optional kann die Presskraft F_{P} stufenweise übertragen werden. Die aufzuwendende Presskraft F_{P} ist abhängig von der zu verarbeitenden Lebensmittelportion, insbesondere deren Zusammensetzung.

Der Antrieb 20 weist ferner eine Schnellkupplung 20a auf, die einfach mit einer von dem Antrieb 20 entfernten, nicht dargestellten, Druckluftquelle verbunden werden kann. Dies ist insbesondere von Vorteil, wenn das Gehäuse 2 in einen Bearbeitungsraum, in der die Wärme- und/oder Rauchbehandlung erfolgt, eingefahren werden soll, um dort das Lebensmittelprodukt herzustellen. Nachdem das Gehäuse 2 in dem Bearbeitungsraum platziert ist, wird ein Druckluftschlauch an die Schnellkupplung 20a angeschlossen und der Antrieb 20 so mit Druckluft versorgt. Dadurch entfällt ein Unterbrechen des Herstellungsprozesses, um den Antrieb 20 zu justieren. Im Idealfall wird eine Genauigkeit und/oder Qualität des Lebensmittelproduktes verbessert.

Zwischen dem Deckel 12 des Gehäuses 2 und dem Druckstempel 18 sind neun teleskopierbare Führungsschienen 16 angeordnet. Diese dienen zum, insbesondere linearen, Führen des Druckstempels 18 im Gehäuse 2, wenn dieser im Gehäuse 2 bewegt wird. Dadurch wird ein ungleichförmiges Bewegen des Druckstempels 18, insbesondere ein seitliches Verkippen oder Verkanten im Gehäuse 2, vermieden. Es wird sichergestellt, dass der Druckstempel 18 die gewünschte Presskraft F_{P} auf die Stapel 32 ausübt. Dies trägt zu einem nahezu reibungsfreien und optional wirtschaftlichen Prozessablauf bei. Insbesondere da mehrere Führungsschiene 16 vorgesehen sind, wird die Führung des Druckstempels 18 im Vergleich zu nur einer Führungsschiene 16 verbessert. Optional können mehr oder weniger Führungsschienen 16 vorgesehen sein. Die Führungsschienen 16 sind im vorliegenden Ausführungsbeispiel in einer 3 x 3 Matrix in dem Gehäuse 2 angeordnet (siehe Figur 1). Somit sind je drei Führungsschienen 16 hintereinander zwischen je zwei Stapeln 32 angeordnet. Ein Abstand d der Führungsschienen 16 zueinander und zu einem Rand des Gehäuses 2 ist abhängig von den Formbehältern 30 bzw. Stapeln 32, insbesondere deren Breite b. Im vorliegenden Ausführungsbeispiel ist der Formbehälter 30 bzw. der Stapel 32 etwa 185 mm breit, sodass der Abstand d etwa 188 mm beträgt, also geringfügig breiter ist als der Formbehälter 30. Dadurch können die Formbehälter 30 einfach zwischen den Führungsschienen 16 platziert werden.

Die Führungsschienen 16 dienen zugleich als seitlicher Anschlag für die Stapel 32. Dies ermöglicht eine einfache und genaue Positionierung der Stapel 32 innerhalb des Gehäuses 2. Zudem wird, insbesondere bei der Bewegung des Druckstempels 18, verhindert, dass einer oder mehrere der Formbehälter 30 des Stapels 32 kippt und/oder sich verdreht. Somit werden die Stapel 32 in dem Gehäuse 2 stabilisiert. Außerdem erleichtert dies ein Bestücken und Entleeren des Gehäuses 2, da die Führungsschienen 16 als Führung für die Formbehälter 30 dienen.

Die Führungsschiene 16 ist lösbar an dem Deckel 12 und dem Druckstempel 18 befestigt. Dies ist insbesondere für eine Reinigung der Führungsschienen 16 und/oder des Gehäuses 2 von Vorteil.

Figur 3 zeigt eine schematische Ansicht einer Führungsschiene 16 einer Vorrichtung 1 zum Herstellen eines Lebensmittelproduktes gemäß einer Ausführungsform. Die Führungsschiene 16 umfasst ein Schienengehäuse 16a mit einem darin verschiebbaren Auszugelement 16b. Das Schienengehäuse 16a ist mit dem Deckel 12 verbunden und das Auszugelement 16b ist mit dem Druckstempel 18 verbunden. Optional kann das Schienengehäuse 16a mit dem Druckstempel 18 verbunden und das Auszugelement 16b mit dem Deckel 12 verbunden sein.

Das Schienengehäuse 16a hat einen Schienengehäuse-Innendurchmesser von etwa 42 mm und eine Schienengehäuse-Wandstärke von zwei Millimetern. Optional kann das Schienengehäuse 16a einen Schienengehäuse-Innendurchmesser von mindestens etwa 35 mm, vorzugsweise mindestens etwa 40 mm, haben. Das Schienengehäuse 16a kann einen Schienengehäuse-Innendurchmesser von höchstens etwa 50 mm, vorzugsweise höchstens etwa 45 mm, haben. Optional kann das Schienengehäuse 16a eine Schienengehäuse-Wandstärke von mindestens etwa einem Millimeter haben. Das Schienengehäuse 16a kann eine Schienengehäuse-Wandstärke von höchstens etwa fünf Millimetern, vorzugsweise höchstens etwa drei Millimetern, haben.

Das Auszugelement 16b hat einen Auszugelement-Außendurchmesser von etwa 35 mm und eine Auszugelement-Wandstärke von etwa zwei Millimetern. Optional kann das Auszugelement 16b einen Auszugelement-Außendurchmesser von mindestens etwa 30 mm haben. Das Auszugelement 16b kann einen Auszugelement-Außendurchmesser von höchstens etwa 47 mm, vorzugsweise höchstens etwa 40 mm, haben. Das Auszugelement 16b kann optional eine Auszugelement-Wandstärke von mindestens etwa einem Millimeter haben. Das Auszugelement 16b kann eine Auszugelement-Wandstärke von höchstens etwa fünf Millimeter, vorzugsweise höchstens etwa drei Millimeter haben.

Das Auszugelement 16b steht mit dem Schienengehäuse 16a mittels eines nicht dargestellten Gleit-Innenrohrs in Eingriff. Bei einer Bewegung des Auszugelements 16b relativ zum Schienengehäuse 16a kann das Gleit-Innenrohr, insbesondere eine Gleitfläche davon, an einer Schienengehäuse-Innenwand gleiten. Das Gleit-Innenrohr umfasst Polyoxymethylen (POM) und Polytetrafluorethylen (PTFE). Es können eine Beschädigung des Auszugelements 16b und/oder des Schienengehäuses 16a verhindert werden. Es können im Idealfall eine Reibung, Vibrationen und/oder Geräusche zwischen dem Auszugelement 16b und dem Schienengehäuse 16a reduziert werden. Das Gleit-Innenrohr ist an dem Auszugelement 16b lösbar befestigt. Im vorliegenden Ausführungsbeispiel ist das Gleit-Innenrohr an einem Innengewinde des Auszugelements 16b mit einer Schraube befestigt. Die Gleitfläche beträgt etwa 100 mm. Optional kann die Gleitfläche mindestens etwa 50 mm, vorzugsweise mindestens etwa 60 mm, lang sein. Die Gleitfläche kann höchstens etwa 120 mm, vorzugsweise höchstens etwa 90 mm, lang sein.

Das Auszugelement 16b ist höchstens um einen maximalen Schienenweg wₘₐₓ von knapp 75 cm aus dem Schienengehäuse 16a heraus- bzw. in das Schienengehäuse 16a hineinverschiebbar. Der maximale Schienenweg entspricht im vorliegenden Ausführungsbeispiel etwa einer Länge des Auszugelements 16b. In einem Zustand in dem der Druckstempel 18 in der unteren Druckstempelposition P₀ ist, ist das Auszugelement 16b aus dem Schienengehäuse 16a um höchstens den maximalen Schienenweg wₘₐₓ herausgefahren. Bewegt sich der Druckstempel 18 von der unteren Druckstempelposition P₀ in die obere Druckstempelposition P₁ um den Druckstempelweg x von 50 cm, wird das Auszugelement 16b um eine dem Druckstempelweg x entsprechende Strecke x' in das Schienengehäuse 16a hineingefahren.

Die Führungsschienen 16 sind nahtlos ausgebildet. Dies ermöglicht eine gleichmäßige Verschiebung des Auszugelements 16b in das oder aus dem Schienengehäuse 16a. Zudem verbessert dies eine Führung des Druckstempels 18, sodass insbesondere ein seitliches Verkippen oder Verkanten des Druckstempels 18 im Gehäuse 2 nahezu vermieden und im Idealfall eine gleichförmige und insbesondere nahezu ruckfreie Bewegung des Druckstempels 18 ermöglicht wird. Dadurch wird die Qualität des hergestellten Lebensmittelproduktes verbessert.

## Patentansprüche

1. Vorrichtung (1) zum Herstellen eines Lebensmittelproduktes aus einer Lebensmittelportion, wobei die Vorrichtung (1) umfasst:
ein an zumindest einer Seite offenes Gehäuse (2) zum Aufnehmen von einer Vielzahl von in zumindest einem Stapel (32) unmittelbar aufeinander angeordneten, jeweils mit einer Lebensmittelportion befüllbaren, separaten Formbehältern (30),
zumindest einen in einem Bodenbereich (6) des Gehäuses (2) angeordneten Antrieb (20) zum Antreiben eines im Gehäuse (2) in Richtung des Stapels (32) verschiebbar gelagerten Druckstempels (18) zum Ausüben einer Presskraft auf den Stapel (32) und
zumindest eine zwischen einem Deckel (12) des Gehäuses (2) und dem Druckstempel (18) angeordnete teleskopierbare Führungsschiene (16) zum Führen des Druckstempels (18) im Gehäuse (2).

2. Vorrichtung nach Anspruch 1,
**dadurch gekennzeichnet, dass**
zwei oder mehr Führungsschienen (16) vorgesehen sind.

3. Vorrichtung nach Anspruch 1 oder 2,
**dadurch gekennzeichnet, dass**
die teleskopierbare Führungsschiene (16) nahtlos ausgebildet ist.

4. Vorrichtung nach einem der vorangehenden Ansprüche,
**dadurch gekennzeichnet, dass**
die teleskopierbare Führungsschiene (16) als seitlicher Anschlag für den Stapel (32) ausgebildet ist.

5. Vorrichtung nach einem der vorangehenden Ansprüche,
**dadurch gekennzeichnet, dass**
der Druckstempel (18) und/oder die teleskopierbare Führungsschiene (16) um mindestens 35 cm, vorzugsweise um mindestens 40 cm, und/oder höchstens 80 cm, vorzugsweise höchstens 60 cm verschiebbar ist.

6. Vorrichtung nach einem der vorangehenden Ansprüche,
**dadurch gekennzeichnet, dass**
der Antrieb (20) einen pneumatischen, hydraulischen oder elektrischen Hubzylinder (21) umfasst.

7. Vorrichtung nach einem der vorangehenden Ansprüche,
**dadurch gekennzeichnet, dass**
das Gehäuse (2) durch ein an mehreren, vorzugsweise an allen Seiten offenes Gestell (3) gebildet ist.

8. Vorrichtung nach einem der vorangehenden Ansprüche,
**dadurch gekennzeichnet, dass**
das Gehäuse (2) zum Aufnehmen von mehreren nebeneinander angeordneten Stapeln (32) ausgebildet ist.

9. Vorrichtung nach einem der vorangehenden Ansprüche,
**dadurch gekennzeichnet, dass**
das Gehäuse (2) fahrbar ist.

10. Verfahren zum Herstellen eines Lebensmittelproduktes aus einer Lebensmittelportion unter Verwendung einer Vorrichtung (1) nach einem der Ansprüche 1 bis 9.
